(19) Europäisches Patentamt
European Patent Office
Office européen des brevets

(11) Veröffentlichungsnummer: **0 239 538 B1**

(12) **EUROPÄISCHE PATENTSCHRIFT**

(45) Veröffentlichungstag der Patentschrift: **06.05.92**

(51) Int. Cl.5: **C07C 255/58**, C07F 5/04

(21) Anmeldenummer: **87810161.7**

(22) Anmeldetag: **20.03.87**

(54) **Verfahren zur Herstellung von 1,4-Diamino-2,3-dicyanoanthrachinonen.**

(30) Priorität: **26.03.86 CH 1206/86**

(43) Veröffentlichungstag der Anmeldung:
**30.09.87 Patentblatt 87/40**

(45) Bekanntmachung des Hinweises auf die Patenterteilung:
**06.05.92 Patentblatt 92/19**

(84) Benannte Vertragsstaaten:
**CH DE FR GB LI**

(56) Entgegenhaltungen:
**GB-A- 1 545 629**

(73) Patentinhaber: **CIBA-GEIGY AG**
**Klybeckstrasse 141**
**CH-4002 Basel(CH)**

(72) Erfinder: **Adam, Jean-Marie, Dr.**
**Rue de Village Neuf 60 D**
**F-68300 Rosenau(FR)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 239 538 B1

## Beschreibung

Die vorliegende Erfindung betrifft ein neues Verfahren zur Herstellung von 1,4-Diamino-2,3-dicyanoanthrachinonen.

Eine Reihe von Verfahren zur Herstellung von 1,4-Diamino-2,3-dicyanoanthrachinon, welches ein wichtiges Zwischenprodukt bei der Farbstoffherstellung darstellt, ist bereits bekannt. So beschreibt z.B. die DE-OS 25 24 748 ein Verfahren, in dem 1,4-Diaminoanthrachinon oder seine in 2- und/oder 3-Stellung mit Chlor oder Brom substituierten Derivate mit Cyaniden umgesetzt werden.

Im Hinblick auf die grosse Bedeutung des 1,4-Diamino-2,3-dicyanoanthrachinons liefert dieses Verfahren das gewünschte Produkt jedoch in zu geringer Ausbeute und Reinheit.

Aufgabe der vorliegenden Erfindung ist deshalb die Bereitstellung eines neuen Verfahrens, nach welchem 1,4-Diamino-2,3-dicyanoanthrachinone in höherer Ausbeute und höherer Reinheit als bisher hergestellt werden können.

Es wurde nun gefunden, dass nach Ueberführung von 1,4-Diaminoanthrachinonen in Borkomplexe, welche eine 1,4-Chinondiiminstruktur besitzen, die Cyanierung des Anthrachinonsystems in 2- und 3-Stellung auf einfache Weise ermöglicht wird.

Gegenstand vorliegender Erfindung ist somit ein Verfahren zur Herstellung von 1,4-Diamino-2,3-dicyanoanthrachinon, dadurch gekennzeichnet, dass man einen Borkomplex der Formel

(1) 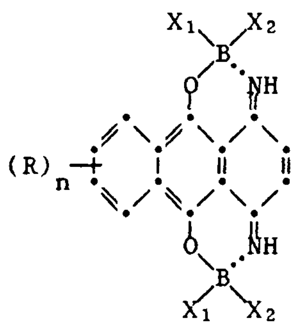 ,

worin $X_1$ und $X_2$ Hydroxyl, Halogen, Acetat oder Sulfatoester sind oder zusammen ein durch eine Doppelbindung an das Boratom gebundenes Sauerstoffatom darstellen, R ein Substituent und n 0, 1 oder 2 ist, in einem polaren aprotischen Lösungsmittel mit einem anorganischen Cyanid in Gegenwart eines Oxidationsmittels umsetzt, das so erhaltene Reaktionsprodukt einer Hydrolyse unterwirft und das 1,4-Diamino-2,3-dicyanoanthrachinon isoliert.

Weitere Gegenstände der vorliegenden Erfindung sind die neuen Borkomplexe der Formel (1), worin $X_1$ und $X_2$ Halogen sind, ein Verfahren zur Herstellung dieser Komplexe sowie die nach den erfindungsgemässen Verfahren erhältlichen Verbindungen.

In den Borkomplexen der Formel (1) bedeuten $X_1$ und $X_2$ Halogen, Acetat oder Sulfat. Vorzugsweise sind $X_1$ und $X_2$ Fluor, Chlor oder Brom, wobei Fluor besonders bevorzugt ist.

R kann für eine Vielzahl von Substituenten stehen, die den Ablauf der erfindungsgemässen Verfahren nicht beeinträchtigen. Vorzugsweise kommen für R Alkyl, Alkoxy, $-CO_2$-Alkyl und -CONH-Alkyl in Betracht, wobei die Alkyl- und Alkoxyreste vorzugsweise 1 bis 6 Kohlenstoffatome enthalten. Ferner kann R eine Säuregruppe wie z.B. $-SO_3M$ und $-CO_2M$ bedeuten, worin M in der Regel Wasserstoff, Ammonium oder ein Alkalimetallatom wie Natrium oder Kalium ist. R kann aber auch für eine elektronegative Gruppe wie Nitro, Cyano oder Halogen, insbesondere Chlor oder Brom stehen.

Die Borkomplexe der Formel (1) können bis zu 2 Substituenten R enthalten. Demgemäss bedeutet n 0, 1 oder 2. Unsubstituierten Borkomplexen (n = 0) kommt in der Regel die grösste Bedeutung zu.

Die Umsetzung der Borkomplexe mit anorganischen Cyaniden wird in einem polaren aprotischen Lösungsmittel durchgeführt. Als Lösungsmittel sind beispielsweise Dimethylsulfoxid, N,N-Dimethylformamid, N-Methylformamid, N-Methylacetamid, Formamid, Acetamid, N-Methylpyrrolidon, 2-Pyrrolidon, N-Formylmorpholin, N-Formylpiperidin, Pyridin oder Gemische dieser Lösungsmittel geeignet, wobei N,N-Dimethylformamid, N-Methylformamid, 2-Pyrrolidon oder deren Gemische bevorzugt werden. Mit 2-Pyrrolidon werden besonders gute Resultate erzielt.

Als anorganisches Cyanid bieten sich üblicherweise Natrium-, Kalium-und Ammoniumcyanid an. Vorzugsweise verwendet man Natriumcyanid.

Das für die erfindungsgemässe Cyanierung notwendige Oxidationsmittel ist in der Regel eine organische Nitroverbindung, (Luft-) Sauerstoff, Dimethylsulfoxid oder Schwefel. Aus der Gruppe organischer Nitroverbindungen werden vorzugsweise Nitrobenzol, Dinitrobenzol und Nitrobenzolsulfonsäure ausgewählt, wobei sich 3-Nitrobenzolsulfonsäure als besonders vorteilhaft erweist. Metalloxide wie Divanadinpentoxid haben sich ebenfalls als geeignete Oxidationsmittel erwiesen.

Gegebenenfalls kann die Cyanierung auch in Gegenwart von Ammoniumsalzen durchgeführt werden, wie z.B. Salzen des Ammoniaks sowie Salzen primärer, sekundärer und/oder tertiärer Amine. Geeignete Ammoniumsalze sind also z.B. Ammoniumchlorid, -sulfat, -phosphat, -acetat, Methyl-, Dimethyl-, Trimethyl- und Tetramethylammoniumchlorid, Aethyl-, Diäthyl-, Triäthyl- und Tetraäthylammoniumchlorid, Propylammoniumchlorid, Butylammoniummchlorid, Triäthylbenzoylammoniumchlorid sowie die entsprechenden Sulfate und Phosphate und Gemische dieser Salze.

Die erfindungsgemässe Cyanierung lässt sich in einem weiten Temperaturbereich durchführen. In guter Reinheit und hoher Ausbeute erhält man das nach der Hydrolyse anfallende 1,4-Diamino-2,3-dicyanoanthrachinon, wenn bei Temperaturen zwischen 20 und 100, vorzugsweise zwischen 60 und 100 und insbesondere zwischen 70 und 90 ° C gearbeitet wird.

Die sich an die Cyanierung anschliessende Hydrolyse wird vorzugsweise am Kochpunkt der dann vorliegenden Reaktionsmischung durchgeführt. Es kann von Vorteil sein, in Gegenwart von Basen wie z.B. Natrium-, Kaliumhydroxid und Natrium(bi)carbonat zu hydrolysieren, da in manchen Fällen unter solchen Bedingungen eine Beschleunigung der Hydrolyse zu beobachten ist.

In einer besonders bevorzugten Ausführungsform des erfindungsgemässen Verfahrens wird ein Borkomplex der Formel

(2) 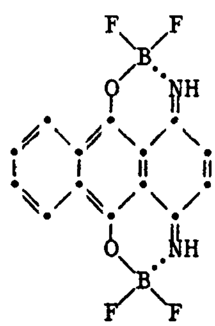 ,

in 2-Pyrrolidon mit Natriumcyanid in Gegenwart von 3-Nitrobenzolsulfonsäure bei 70 bis 90 ° C umgesetzt und das so erhaltene Reaktionsprodukt nach Zugabe von Wasser unter Rückfluss hydrolysiert.

Es hat sich als vorteilhaft erwiesen, bezogen auf den Borkomplex, mit einem 3- bis 6-fachen molaren Ueberschuss an anorganischem Cyanid, einen 1- bis 2-fachen molaren Ueberschuss an Oxidationsmittel und der 5- bis 10-fachen (Gewichts-)Menge an Lösungsmittel zu arbeiten.

Wird die erfindungsgemässe Cyanierung in Gegenwart von Ammoniumsalzen durchgeführt, so sind nur geringe Mengen dieser Verbindungen erforderlich. Vorzugsweise wird dann, bezogen auf eingesetztes anorganisches Cyanid, die 0,1- bis 1,5-fache molare Menge an Ammoniumsalz verwendet.

Die auf diese Weise erhältlichen 1,4-Diamino-2,3-dicyanoanthrachinone fallen in hoher Ausbeute, in der Regel zwischen 70 und 80 %, und hoher Reinheit an und können nach Waschen mit z.B. Wasser ohne weitere Reinigungsoperationen direkt als Zwischenprodukt zur Herstellung von Farbstoffen verwendet werden.

Die Herstellung der neuen Borkomplexe der Formel (1) erfolgt durch Umsetzung der 1,4-Diaminoanthrachinone mit einem Bortrihalogenid, mit Bortriacetat oder -trisulfat. Vorzugsweise verwendet man ein Bortrihalogenid, insbesondere in Form eines Aetherats wie z.B. $(Halogenid)_3\ B\bullet O(C_2H_5)_2$. Besonders vorteilhaft hat sich die Verwendung von $F_3B\bullet O(C_2H_5)_2$ erwiesen.

Die gesamte Umsetzung wird bei 120 bis 170, insbesondere 130 bis 150 ° C in einem aromatischen, organischen Lösungsmittel durchgeführt, welches vorzugsweise Halogenatome enthält wie Chlor-, Dichlor- und Trichlorbenzol. Beispielsweise hat sich o-Dichlorbenzol als besonders geeignet herausgestellt.

Die so erhaltenen Borkomplexe fallen in hoher Ausbeute an. Sie können nach Waschen mit dem verwendeten Lösungsmittel, vorzugsweise in Kombination mit Benzol oder Toluol, zur Herstellung von 1,4-Diamino-2,3-dicyanoanthrachinonen verwendet werden.

Die Isolierung der Borkomplexe als auch der 1,4-Diamino-2,5-dicyanoanthrachinone erfolgt auf übliche Weise, wie z.B. durch Abnutschen, Filtrieren oder Zentrifugieren, anschliessendem Waschen und Trocknen.

Die folgenden Beispiele erläutern die Erfindung ohne sie darauf zu beschränken.

Beispiel 1: Herstellung der Verbindung der Formel

(2) 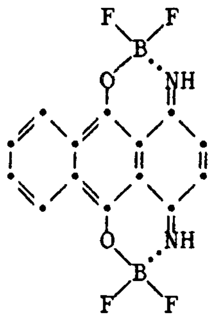 ,

48 Gewichtsteile 1,4-Diaminoanthrachinon wurden in 1000 Gewichtsteilen o-Dichlorbenzol bei 160 °C gelöst und mit 114 Gewichtsteilen Bortrifluorid (Diäthyläther) versetzt. Die Reaktionsmischung wurde 10 Stunden bei 140 °C Innentemperatur gerührt. Man filtrierte heiss ab, wusch den Rückstand mit o-Dichlorbenzol und Toluol und trocknete das erhaltene Produkt.

Man erhielt so 60 Gewichtsteile Verbindung der Formel (2); der Schmelzpunkt lag über 250 °C.

| Elementaranalyse: $C_{14}$ $H_8$ $B_2$ $F_4$ $N_2$ $O_2$ | | | | | |
|---|---|---|---|---|---|
| | C | H | B | F | N |
| % ber. | 50,4 | 2,4 | 6,5 | 22,8 | 8,4 |
| % gef. | 50,2 | 2,5 | 6,3 | 22,5 | 8,4 |

Ersetzt man die 114 Gewichtsteile Bortrifluorid (Diäthyläther) durch 94 Teile Bortrichlorid oder 200 Teile Bortribromid und verfährt wie angegeben, so erhält man den entsprechenden Bisborchlorid- bzw. Bisborbromidkomplex in gleich guter Ausbeute.

Beispiel 2: Herstellung von 1,4-Diamino-2,3-dicyanoanthrachinon.

In 400 Gewichtsteile 2-Pyrrolidon, welches eine Temperatur von 80 °C besass, wurde portionenweise ein Gemisch aus 41 Gewichtsteilen Natriumcyanid, 39 Gewichtsteilen 3-Nitrobenzolsulfonsäure (Natriumsalz) und 58 Gewichtsteilen der Verbindung der Formel (2) eingetragen. Das Reaktionsgemisch wurde noch 1 Stunde bei 80 °C gerührt. Anschliessend verdünnte man mit 500 Gewichtsteilen Wasser und kochte 4 Stunden unter Rückfluss. Das Produkt fiel während dieser Hydrolyse kristallin aus. Es wurde heiss abfiltriert, mit Wasser gewaschen und getrocknet.

Man erhielt so 44 Gewichtsteile Produkt mit einer Reinheit von 85 % (HPLC-Bestimmung), was einer Ausbeute von 76 % entspricht. Der Schmelzpunkt lag über 250 °C.

Aehnlich gute Ergebnisse konnten auch erzielt werden, wenn anstelle des Bisborfluoridkomplexes der Formel (2) der entsprechende Bisborbromid-, acetat- und -sulfatkomplex verwendet wurden.

Beispiel 3: Herstellung von 1,4-Diamino-2,3-dicyanoanthrachinon.

In 400 Gewichtsteile 2-Pyrrolidon, welches eine Temperatur von 100 °C besass, wurde portionenweise ein Gemisch aus 41 Gewichtsteilen Natriumcyanid, 39 Gewichtsteilen 3-Nitrobenzolsulfonsäure (Natriumsalz) und 58 Gewichtsteilen der Verbindung der Formel (2) eingetragen. Das Reaktionsgemisch wurde noch 1 Stunde bei 100 °C gerührt. Anschliessend verdünnte man mit 500 Gewichtsteilen Wasser und kochte 4 Stunden unter Rückfluss. Das Produkt fiel während dieser Hydrolyse kristallin aus. Es wurde heiss abfiltriert, mit Wasser gewaschen und getrocknet.

Man erhielt so 46 Gewichtsteile Produkt mit einer Reinheit von 80 % (HPLC-Bestimmung), was einer Ausbeute von 74 % entspricht. Der Schmelzpunkt lag über 250 °C.

Aehnlich gute Ergebnisse konnten auch erzielt werden, wenn anstelle von 2-Pyrrolidon N-Methylformamid, N,N-Dimethylformamid, Dimethylsulfoxid, N-Methylacetamid oder N-Methylpyrrolidon verwendet werden.

Beispiel 4: Herstellung von 1,4-Diamino-2,3-dicyanoanthrachinon.

In 400 Gewichtsteile 2-Pyrrolidon, welches eine Temperatur von 60 °C besass, wurde portionenweise ein Gemisch aus 41 Gewichtsteilen Natriumcyanid, 13 Gewichtsteilen Dimethylsulfoxid und 58 Gewichtsteilen der Verbindung der Formel (2) eingetragen. Das Reaktionsgemisch wurde noch 4 Stunden bei 60 °C gerührt. Anschliessend verdünnte man mit 500 Gewichtsteilen Wasser und kochte 4 Stunden unter Rückfluss. Das Produkt fiel während dieser Hydrolyse kristallin aus. Es wurde heiss abfiltriert, mit Wasser gewaschen und getrocknet.

Man erhielt so 40 Gewichtsteile Produkt mit einer Reinheit von 90 % (HPLC-Bestimmung), was einer Ausbeute von 73 % entspricht. Der Schmelzpunkt lag über 250 °C.

Aehnlich gute Ergebnisse konnten auch erzielt werden, wenn anstelle von Dimethylsulfoxid Luft eingeleitet wurde.

Beispiel 5:

Verfährt man wie in Beispiel 2 angegeben und ersetzt die 58 Gewichtsteile der Verbindung der Formel (2) durch 40 Gewichtsteile 1,4-Diaminoanthrachinon, so wird keine Reaktion beobachtet.

**Patentansprüche**

1. Verfahren zur Herstellung von 1,4-Diamino-2,3-dicyanoanthrachinon, dadurch gekennzeichnet, dass man einen Borkomplex der Formel

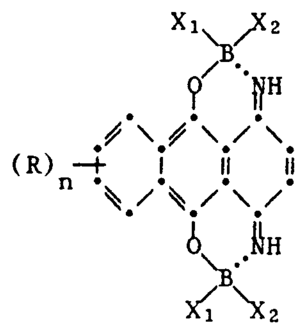

,

worin $X_1$ und $X_2$ Hydroxyl, Halogen, Acetat oder Sulfatoester sind oder zusammen ein durch eine Doppelbindung an das Boratom gebundenes Sauerstoffatom darstellen, R ein Substituent ist, und n 0, 1 oder 2 ist, in einem polaren aprotischen Lösungsmittel mit einem anorganischen Cyanid in Gegenwart eines Oxidationsmittels umsetzt, das so erhaltene Reaktionsprodukt einer Hydrolyse unterwirft und das 1,4-Diamino-2,3-dicyanoanthrachinon isoliert.

2. Verfahren nach Anspruch 1, dadurch gekennzeichnet, dass man einen Borkomplex verwendet, in dem $X_1$ und $X_2$ Fluor, Chlor oder Brom sind.

3. Verfahren nach Anspruch 1, dadurch gekennzeichnet, dass man einen Borkomplex verwendet, in dem R Alkyl, Alkoxy, $-CO_2$-Alkyl, -CONH-Alkyl, $-SO_3M$ oder $-CO_2M$, worin M Wasserstoff, Ammonium oder ein Alkalimetallatom ist, Nitro, Cyano oder Halogen, ist.

4. Verfahren nach Anspruch 1, dadurch gekennzeichnet, dass man als polares aprotisches Lösungsmittel Dimethylsulfoxid, N,N-Dimethylformamid, N-Methylformamid, N-Methylacetamid, Formamid, Acetamid, N-Methylpyrrolidon, 2-Pyrrolidon, N-Formylmorpholin, N-Formylpiperidin, Pyridin oder Gemische dieser Lösungsmittel verwendet.

5. Verfahren nach Anspruch 4, dadurch gekennzeichnet, das man N,N-Dimethylformamid, N-Methylformamid, 2-Pyrrolidon oder Gemische dieser Lösungsmittel verwendet.

6. Verfahren nach Anspruch 1, dadurch gekennzeichnet, dass man als anorganisches Cyanid Natrium-, Kalium- oder Ammoniumcyanid verwendet.

7. Verfahren nach Anspruch 1, dadurch gekenzeichnet, dass man als Oxidationsmittel organische Nitroverbindungen, Sauerstoff, Dimethylsulfoxid, Schwefel oder Divanadinpentoxid verwendet.

8. Verfahren nach Anspruch 7, dadurch gekennzeichnet, dass man als organische Nitroverbindung Nitrobenzol, Dinitrobenzol oder 3-Nitrobenzolsulfonsäure verwendet.

9. Verfahren nach Anspruch 1, dadurch gekennzeichnet, dass man die Cyanierung in Gegenwart von Ammoniumsalzen durchführt.

10. Verfahren nach Anspruch 1, dadurch gekennzeichnet, dass man die Cyanierung bei 20 bis 100 °C durchführt.

11. Verfahren nach Anspruch 1, dadurch gekennzeichnet, dass man die Cyanierung bei 60 bis 100 °C durchführt.

12. Verfahren nach Anspruch 1, dadurch gekennzeichnet, dass man die Hydrolyse am Kochpunkt der Reaktionsmischung durchführt.

13. Verfahren nach einem der Ansprüche 1 bis 12, dadurch gekennzeichnet, dass man die Verbindung der Formel

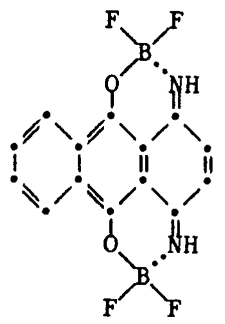

,

in 2-Pyrrolidon mit Natriumcyanid in Gegenwart von 3-Nitrobenzolsulfonsäure bei 70 bis 90 °C umsetzt und das so erhaltene Reaktionsprodukt nach Zugabe von Wasser unter Rückfluss hydrolysiert.

14. Verfahren nach Anspruch 1, dadurch gekennzeichnet, dass man, bezogen auf eingesetzte Borkomplexverbindung, einen 3- bis 6-fachen molaren Ueberschuss an anorganischem Cyanid, einen 1- bis 2-fachen molaren Ueberschuss an Oxidationsmittel und die 5- bis 10-fache Menge an Lösungsmittel verwendet.

**15.** Verbindungen der Formel

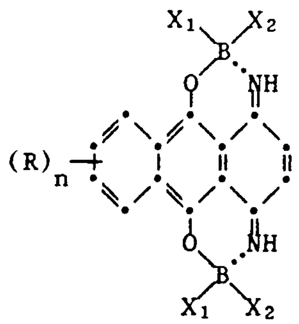

,

worin $X_1$ und $X_2$ Halogen sind, R Alkyl, Alkoxy, $-CO_2$-Alkyl, -CONH-Alkyl, $-SO_3M$ oder $-CO_2M$, worin M Wasserstoff, Ammonium oder ein Alkalimetallatom ist, Nitro, Cyano oder Halogen, und n 0, 1 oder 2 ist.

**16.** Verbindungen nach Anspruch 15, dadurch gekennzeichnet, dass $X_1$ und $X_2$ Halogen sind, und n 0 ist.

**17.** Verfahren zur Herstellung der Verbindungen nach Anspruch 15, dadurch gekennzeichnet, dass man 1,4-Diaminoanthrachinone der Formel

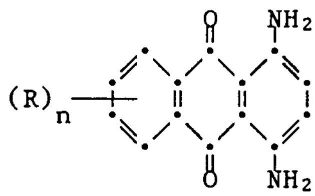

in einem aromatischen, organischen Lösungsmittel bei 120 bis 170°C entweder mit einem Bortrihalogenid, oder mit einem Bortriacetat oder mit einem Bortrisulfat umsetzt und die erhaltenen Borkomplexe der Formel

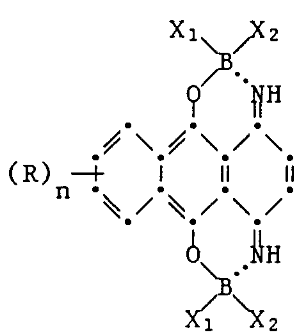

,

worin die Symbole R, n, $X_1$ und $X_2$ die im Anspruch 15 angegebene Bedeutung haben isoliert.

**18.** Verfahren nach Anspruch 17, dadurch gekennzeichnet, dass man 1,4-Di-aminoanthrachinone in o-Dichlorbenzol bei 130 bis 150°C mit einem Bortrihalogenid umsetzt.

**19.** Verfahren nach Anspruch 18, dadurch gekennzeichnet, dass man das Bortrihalogenid in Form eines Aetherates verwendet.

## Claims

1. A process for the preparation of 1,4-diamino-2,3-dicyanoanthraquinone, which comprises reacting a boron complex of formula

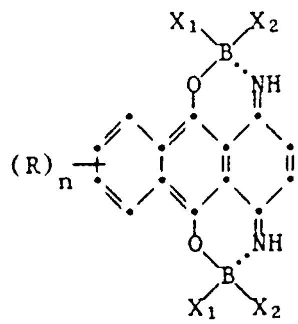

,

wherein $X_1$ and $X_2$ are hydroxyl, halogen, acetate or sulfato ester or together are an oxygen atom attached by a double bond to the boron atom, R is a substituent and n is 0, 1 or 2, with an inorganic cyanide in a polar aprotic solvent and in the presence of an oxidising agent, subjecting the reaction product thus obtained to a hydrolysis and isolating the 1,4-diamino-2,3-dicyanoanthraquinone.

2. A process according to claim 1, which comprises using a boron complex in which $X_1$ and $X_2$ are fluorine, chlorine or bromine.

3. A process according to claim 1, which comprises using a boron complex in which R is alkyl, alkoxy, $-CO_2$-alkyl, -CONH-alkyl, $-SO_3M$ or $-CO_2M$, wherein M is hydrogen, ammonium or an alkali metal atom, nitro, cyano or halogen.

4. A process according to claim 1, wherein the polar aprotic solvent used is dimethyl sulfoxide, N,N-dimethylformamide, N-methylformamide, N-methylacetamide, formamide, acetamide, N-methylpyrrolidone, 2-pyrrolidone, N-formylmorpholine, N-formylpiperidine, pyridine, or a mixture of these solvents.

5. A process according to claim 4, wherein N,N-dimethylformamide, N-methylformamide, 2-pyrrolidone, or a mixture of these solvents is used.

6. A process according to claim 1, wherein the inorganic cyanide used is sodium cyanide, potassium cyanide or ammonium cyanide.

7. A process according to claim 1, wherein the oxidising agent used is an organic nitro compound, oxygen, dimethyl sulfoxide, sulfur or divanadium pentoxide.

8. A process according to claim 7, wherein the organic nitro compound used is nitrobenzene, dinitrobenzene or 3-nitrobenzenesulfonic acid.

9. A process according to claim 1, wherein the cyanation is carried out in the presence of ammonium salts.

10. A process according to claim 1, wherein the cyanation is carried out at from 20 to 100 °C.

11. A process according to claim 1, wherein the cyanation is carried out at from 60 to 100 °C.

12. A process according to claim 1, wherein the hydrolysis is carried out at the boiling point of the reaction mixture.

**13.** A process according to any one of claims 1 to 12, which comprises reacting the compound of formula

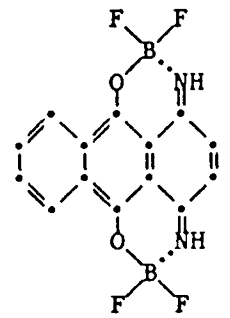

,

with sodium cyanide in 2-pyrrolidone and in the presence of 3-nitro-benzenesulfonic acid, at from 70 to 90° C, and, after addition of water, hydrolysing the reaction product thus obtained under reflux.

**14.** A process according to claim 1, which comprises using, based on the boron complex compound employed, a 3- to 6-fold molar excess of inorganic cyanide, a 1- to 2-fold molar excess of oxidising agent, and the 5- to 10-fold amount of solvent.

**15.** A compound of formula

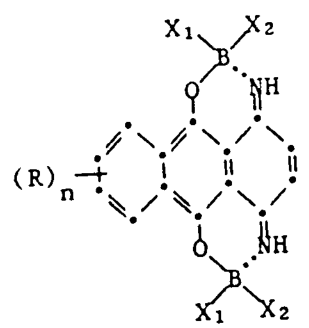

,

wherein $X_1$ and $X_2$ are halogen, R is alkyl, alkoxy, $-CO_2$-alkyl, -CONH-alkyl, $-SO_3M$ or $-CO_2M$, wherein M is hydrogen, ammonium or an alkali metal atom, nitro, cyano or halogen, and n is 0, 1 or 2.

**16.** A compound according to claim 15, wherein $X_1$ and $X_2$ are halogen and n is 0.

**17.** A process for the preparation of a compound as claimed in claim 15, which comprises reacting a 1,4-diaminoanthraquinone of formula

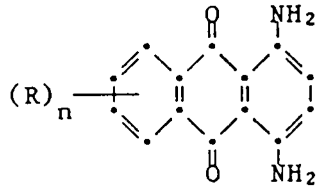

with a boron trihalide, or with a boron triacetate or a boron trisulfate, in an aromatic organic solvent at

from 120 to 170 ° C, and isolating the resulting boron complex of formula

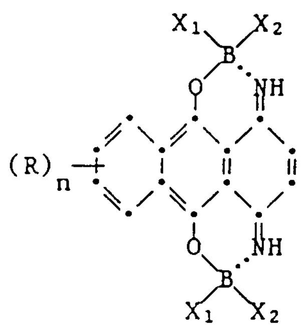

,

wherein the symbols R, n, $X_1$ and $X_2$ are as defined in claim 15.

18. A process according to claim 17, which comprises reacting a 1,4-diaminoanthraquinone with a boron trihalide in o-dichlorobenzene at from 130 to 150 ° C.

19. A process according to claim 18, which comprises using the boron trihalide in the form of an etherate.

**Revendications**

1. Procédé de préparation de 1,4-diamino-2,3-dicyanoanthraquinones, caractérisé en ce qu'on fait réagir, dans un solvant aprotique polaire, un complexe du bore de formule

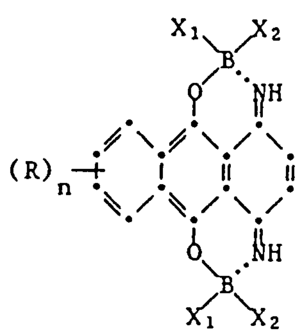

,

dans laquelle $X_1$ et $X_2$ représentent hydroxyle, halogène, acétate ou ester sulfate, ou bien, ensemble, un atome d'oxygène lié à l'atome de bore par une double liaison, R est un substituant, et n vaut 0, 1 ou 2, avec un cyanure minéral en présence d'un oxydant, on soumet le produit réactionnel ainsi obtenu à une hydrolyse et on isole la 1,4-diamino-2,3-dicyanoanthraquinone.

2. Procédé selon la revendication 1, caractérisé en ce qu'on utilise un complexe du bore, dans lequel $X_1$ et $X_2$ sont des substituants fluoro, chloro ou bromo.

3. Procédé selon la revendication 1, caractérisé en ce qu'on utilise un complexe du bore, dans lequel R est alkyle, alcoxy, $-CO_2$-alkyle, -CONH-alkyle, $-SO_3M$ ou $-CO_2M$ (M est hydrogène, ammonium ou un atome de métal alcalin), nitro, cyano ou halogène.

4. Procédé selon la revendication 1, caractérisé en ce qu'on utilise, comme solvant polaire aprotique, le diméthylsulfoxyde, le N,N-diméthylformamide, le N-méthylformamide, le N-métylacétamide, le formamide, l'acétamide, la N-méthlylpyrrolidone, la 2-pyrrolidone, la N-formylmorpholine, la N-formylpipéridine, la pyridine, ou des mélanges de ces solvants.

**5.** Procédé selon la revendication 4, caractérisé en ce qu'on utilise le N,N-diméthylformamide, le N-méthylformamide, la 2-pyrrolidone, ou des mélanges de ces solvants.

**6.** Procédé selon la revendication 1, caractérisé en ce qu'on utilise, comme cyanure minéral, le cyanure de sodium, de potassium ou d'ammonium.

**7.** Procédé selon la revendication 1, caractérisé en ce qu'on utilise, comme oxydants, des composés nitrés organiques, loxygène, le diméthylsulfoxyde, le soufre ou le pentoxyde vanadique.

**8.** Procédé selon la revendication 7, caractérisé en ce qu'on utilise, comme composés nitrés organiques, le nitrobenzène, le dinitrobenzène ou l'acide 3-nitrobenzènesulfonique.

**9.** Procédé selon la revendication 1, caractérisé en ce qu'on réalise la cyanuration en présence de sels d'ammonium.

**10.** Procédé selon la revendication 1, caractérisé en ce qu'on réalise la cyanuration à une température comprise entre 20 et 100 ° C.

**11.** Procédé selon la revendication 1, caractérisé en ce qu'on réalise la cyanuration à une température comprise entre 60 et 100 ° C.

**12.** Procédé selon la revendication 1, caractérisé en ce qu'on réalise l'hydrolyse au point d'ébullition du mélange réactionnel.

**13.** Procédé selon l'une des revendications 1 à 12, caractérisé en ce qu'on fait réagir à 70-90 ° C, dans la 2-pyrrolidone, le composé de formule

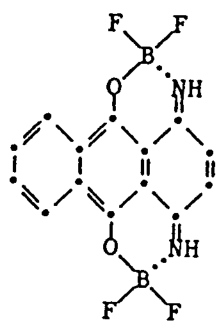

,

avec du cyanure de sodium en présence d'acide 3-nitrobenzènesulfonique, et on hydrolyse à reflux, après addition d'eau, le produit réactionnel obtenu.

**14.** Procédé selon la revendication 1, caractérisé en ce qu'on met en oeuvre, par rapport au complexe du bore introduit, le cyanure minéral en un excès de 3 à 6 fois en moles, l'oxydant en un excès de 1 à 2 fois en moles, et le solvant en une quantité 5 à 10 fois supérieure.

**15.** Composés de formule

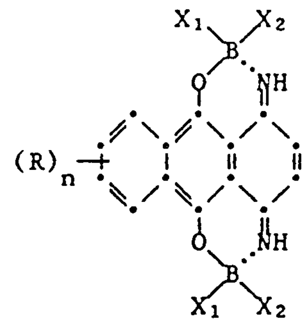

,

dans laquelle $X_1$ et $X_2$ représentent un atome d'halogène, R est alkyle, alcoxy, $-CO_2$-alkyle, -CONH-alkyle, $-SO_3M$ ou - $CO_2M$ (M est hydrogène, ammonium ou un atome de métal alcalin), nitro, cyano ou halogène, et n vaut 0, 1 ou 2.

**16.** Composés selon la revendication 15, caractérisés en ce que $X_1$ et $X_2$ représentent un atome d'halogène et n vaut 0.

**17.** Procédé de préparation des composés selon la revendication 15, caractérisé en ce qu'on fait réagir à 120-170 ° C, dans un solvant organique aromatique, des 1,4-diaminoanthraquinones de formule

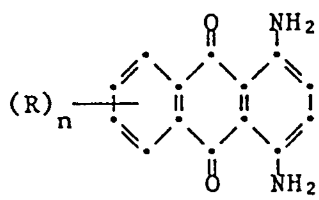

sait avec un trihalogénure de bore, soit avec du triacétate de bore, soit encore avec du trisulfate de bore, et on isole les complexes du bore obtenus, de formule

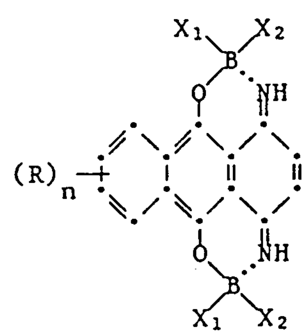

,

dans laquelle les symboles R, n, $X_1$ et $X_2$ ont les définitions indiquées dans la revendication 15.

**18.** Procédé selon la revendication 17, caractérisé en ce qu'on fait réagir à 130-150 ° C dans l'o-dichlorobenzène, des 1,4-diaminoanthraquinones avec un trihalogénure de bore.

**19.** Procédé selon la revendication 18, caractérisé en ce qu'on utilise le trihalogénure de bore sous forme d'éthérate.